# EUROPEAN PATENT APPLICATION

(11) **EP 2 615 774 A1**
(43) Date of publication of application: **17.07.2013**
(21) Application number: 11823714.8
(22) Date of filing: 07.07.2011
(51) Int. Cl.: H04L 12/12, H05B 37/02

(54) **METHOD AND SYSTEM FOR AUTOMATICALLY CONTROLLING ILLUMINATION IN A BUILDING**

(30) Priority: 06.09.2010 KR 20100087116
(71) Applicant: Sk Telecom Co., LTD, Seoul 100-999 (KR)
(72) Inventor: SHIN, Tae Jin, Seoul 158-077 (KR)
(74) Representative: Noble, Nicholas
(86) International application number: PCT/KR2011/004964
(87) International publication number: WO 2012/033281

(57) **Abstract**

The present invention relates to a method and system for automatically controlling illumination, and more particularly, to a method and system for automatically controlling illumination in a building, which involve recognizing a user ID, detecting the entry into and exit from a building by checking the recognized user ID, searching an illumination list in association with the user ID according to the entry into and exit from the building, and controlling a plurality of illumination devices. According to the present invention, lights can be tuned on/off regardless of whether or not people are inside a building, thereby reducing energy waste resulting from lighting of vacant space, reducing the costs of replacing lighting lamps, and reducing the costs of energy for illumination, while minimizing the inconvenience of turning lights on/off using switches for a user. Lights can be automatically turned on/off according to entry and exit information for people inside a building, thereby enhancing user convenience, and additionally enabling the automatic real-time monitoring of data relating to people inside the building as well as of the air conditioning system of the building.

## Description

### TECHNICAL FIELD

The present invention relates generally to a method and system for automatically controlling illumination and, more particularly, to a method and system for an automatic lighting control in a building, which involve recognizing a user ID, detecting entry into and exit from a building, searching an illumination list in association with a recognized user, and controlling a plurality of corresponding lights.

### BACKGROUND ART

There have been technologies for automatically controlling lights in a building by sensing surrounding brightness through various sensors. Such technologies, however, fail to separately control lights only disposed near a window in the building in response to the external light arriving through the window and cannot cope with failure in an illumination controller or accidents. Furthermore, such technologies turn on/off a ceiling illumination lamp group or the entire ceiling illumination lamps using a manual switch only to result in electric energy waste, a reduction in the life span of illumination lamps, and inconvenience in using the illumination lamps.

Conventional automatic building illumination control facilities are installed and operated in such a manner that lights are turned on/off through central control according to a set relay for each lighting circuit group installed in each floor of a building and schedule control and pattern control are automatically performed according to a CCMS. In addition, a lighting control switch installed in each floor is connected to a lighting relay by wire such that a lighting circuit previously mapped to each switch is turned on/off.

Accordingly, current lights in a building are turned on/off according to previously set schedule irrespective of presence or absence of a user in the building, and thus the lights may be turned on in a vacant space to result in energy waste. Furthermore, since there are many lighting switches in the building, a user in the building is difficult to check switches in a corresponding area and turn off lights when exiting from the building, causing serious energy waste.

### DETAILED DESCRIPTION OF THE INVENTION

### Technical Problems

An object of the present invention is to provide a method and system for automatically controlling illumination in a building, which detect presence or absence of people in the building to reduce waste of illumination energy, thereby improving the automatic illumination control system.

Another object of the present invention is to provide a method and system for automatically controlling illumination in a building, which set a wide control range for a lighting switch of each floor of the building to effectively control lighting even when a user cannot recognize the location of the switch.

Another object of the present invention is to provide a method and system for automatically controlling illumination in a building, which integrate software installed in buildings to reduce software installation cost and efficiently use manpower by centralizing maintenance.

Another object of the present invention is to provide a method and system for automatically controlling illumination in a building, which allow a user to directly map an illumination list to a changed location through an Internet webpage when the user moves in the building to minimize the burden of a management unit and limit the number of lights included in the illumination list so as to prevent lights from being turned on in a wide range.

### Technical Solutions

According to an aspect of the present invention, provided is a system for automatically controlling illumination in a building, the system including: one or more ID recognition units installed at each entrance and configured to recognize IDs of users who enter or exit the building; and a building management server configured to check a user ID recognized through the ID recognition units, to detect an entry into or exit from the building of a user corresponding to the checked user ID, to search an illumination list in association with the user ID according to the entry into the building, to control a plurality of lights included in the illumination list to be turned on, to check whether the illumination list includes at least one light corresponding to an illumination list related to another user ID according to the exit from the building, and to control lights other than the at least one light corresponding to the illumination list related to the other user ID to be turned off upon determining that the illumination list includes the at least one light corresponding to the illumination list related to the other user ID.

According to another aspect of the present invention, provided is a building management server including: an access information management unit configured to recognize at least one user ID and to check user information corresponding to the recognized user ID; a main lighting control unit configured to check a plurality of illumination lists according to a signal from a building control unit and to control a mid-level lighting control unit to operate at least one light; and the building control unit configured to check the user ID, to detect an entry into or exit from the building of a user corresponding to the checked user ID, to search an illumination list in association with the user ID according to the entry into the building, to control a plurality of lights included in the illumination list to be turned on, to check whether the illumination list includes at least one light corresponding to an illumination list related to another user ID according to the exit from the building, and to control lights other than the at least one light corresponding to the illumination list related to the other user ID to be turned off upon determining that the illumination list includes the at least one light corresponding to the illumination list related to the other user ID.

The access information management unit may recognize the user ID through at least one of recognition means including RF card recognition, fingerprint recognition, iris recognition, and number recognition using a keypad.

The building control unit may control all the lights included in the illumination list to be turned off upon determining that the illumination list does not include the at least one light corresponding to the illumination list related to the other user ID.

The building control unit may check locations of offices of a plurality of users, search a lighting circuit DB for a plurality of illumination lists related to routes through which the users move to the offices, match the searched illumination lists to user IDs, and register the matched illumination lists and user IDs in an entry and exit DB.

The building control unit may check whether the user ID corresponds to a user ID corresponding to a user of a remote building and, when the user ID corresponds to the user ID of the user of the remote building, control illumination of the remote building.

The building control unit may calculate the number of people inside the building through the checked user ID, store and display the calculated number.

The building control unit may determine whether a user requests an illumination list, provide a screen for selecting a plurality of lights when the user requests the illumination list, select the illumination list input by the user, check whether the number of lights included in the illumination list exceeds a predetermined number, and set the illumination list when the number of lights included in the illumination list does not exceed the predetermined number.

The building control unit may check the illumination list input by the user and generate a warning message when the number of lights included in the illumination list exceeds the predetermined number.

The building control unit may calculate power consumption of each light, store power rates corresponding to the calculated power consumption for each floor and display the power rates in real time.

According to still another aspect of the present invention, provided is a method for automatically controlling illumination in a building, the method including: at a building management server, checking at least one user ID; at the building management server, detecting an entry into or exit from the building of a user corresponding to the checked user ID; at the building management server, searching an illumination list in association with the user ID according to the entry into the building and controlling a plurality of lights included in the illumination list to be turned on; and at the building management server, checking whether the illumination list includes at least one light corresponding to an illumination list related to another user ID according to the exit from the building, and controlling lights other than the at least one light corresponding to the illumination list related to the other user ID to be turned off.

The checking of the user ID may include, at the building management server, recognizing the user ID, and at the building management server, confirming user information about an office location and a user name corresponding to the recognized user ID.

The checking of the user ID may include checking the user ID through at least one of recognition means including RF card recognition, fingerprint recognition, iris recognition, and number recognition using a keypad.

The controlling of lights other than the at least one light corresponding to the illumination list related to the other user ID to be turned off may include, at the building management server, controlling all the lights included in the illumination list to be turned off upon determining that the illumination list does not include the at least one light corresponding to the illumination list related to the other user ID.

The method may further include, prior to the checking of the user ID, at the building management server, checking locations of offices of a plurality of users, at the building management server, searching a plurality of illumination lists related to routes through which the users move to the offices, and at the building management server, matching the searched illumination lists to user IDs and registering the matched illumination lists and user IDs.

The checking of the user ID may include, at the building management server, checking whether the user ID corresponds to a user ID corresponding to a user of a remote building, and at the building management server, controlling illumination of the remote building when the user ID corresponds to the user ID of the user of the remote building.

The controlling of illumination of the remote building may include, at the building management server, detecting an entry into or exit from the building of a user corresponding to the checked user ID in order to control illumination of the remote building, at the building management server, searching an illumination list in association with the user ID according to the entry into the building, and at the building management server, controlling a plurality of lights included in the illumination list to be turned on.

The method may further include, after the detecting of an entry into or exit from the building, at the building management server, calculating the number of people inside the building through the checked user ID, and at the building management server, storing and displaying the calculated number.

The method may further include, after the controlling of the plurality of lights included in the illumination list to be turned on, at the building management server, determining whether a user requests an illumination list, at the building management server, providing a screen for selecting a plurality of lights when the user requests the illumination list, at the building management server, selecting the illumination list input by the user, at the building management server, checking whether the number of lights included in the illumination list exceeds a predetermined number, and at the building management server, setting the illumination list when the number of lights included in the illumination list does not exceed the predetermined number.

The checking of whether the number of lights included in the illumination list exceeds the predetermined number may include, at the building management server, generating a warning message when the number of lights included in the illumination list exceeds the predetermined number.

The method may further include, after the controlling of the plurality of lights included in the illumination list to be turned on, at the building management server, calculating power consumption of each light, and at the building management server, storing power rates corresponding to the calculated power consumption for each floor and displaying the power rates in real time.

### Advantageous effects

According to the present invention, lights can be tuned on/off regardless of whether or not people are inside a building, thereby reducing energy waste resulting from lighting of vacant space, reducing the costs of changing lighting lamps, and reducing the costs of energy for illumination.

Furthermore, the present invention can reduce the inconvenience of turning lights on/off using switches for a user and automatically turn lights on/off according to entry and exit information for people inside a building, thereby enhancing user convenience.

In addition, it is possible to check the number of people inside a building in real time, provide information about illumination energy consumption for each floor and each section in real time to offer a power rate charging scheme in response to energy consumption, thereby inducing a user in the building to voluntarily reduce energy consumption.

### BRIEF DESCRIPTION OF THE DRAWINGS

FIG. 1 illustrates a system for automatically controlling illumination in a building in accordance with an embodiment of the present invention.

FIG. 2 is a block diagram showing a configuration of a building management server in accordance with an embodiment of the present invention.

FIG. 3 is a data flow diagram illustrating a method for automatically controlling illumination in a building in accordance with an embodiment of the present invention.

FIGS. 4 and 5 are flow diagrams illustrating a method for automatically controlling illumination in a building in accordance with an embodiment of the present invention.

FIG. 6 is a flow diagram illustrating a method for automatically controlling illumination when a user moves in accordance with an embodiment of the present invention.

FIG. 7 shows access user information in accordance with an embodiment of the present invention.

FIG. 8 shows a lighting circuit in accordance with an embodiment of the present invention.

### BEST MODE FOR CARRYING OUT THE INVENTION

Reference will now be made in detail to the preferred embodiments of the present invention with reference to the accompanying drawings. In the following description of the present invention, a detailed description of known functions and configurations incorporated herein will be omitted when it may obscure the subject matter of the present invention. The same reference numbers will be used throughout this specification to refer to the same or like parts.

The phraseology and terminology used in the specification and the appended claims should not be interpreted as limited general or literal meanings. Rather, they should be interpreted according to the technical features of the present invention based on the principle that the inventor can define terms appropriately to describe his invention in the best way. Accordingly, embodiments and configurations shown in the drawings are exemplary and do not completely represent the technical spirit of the present invention, and thus it is noted that there are various equivalents and modifications that can replace the embodiments and configuration.

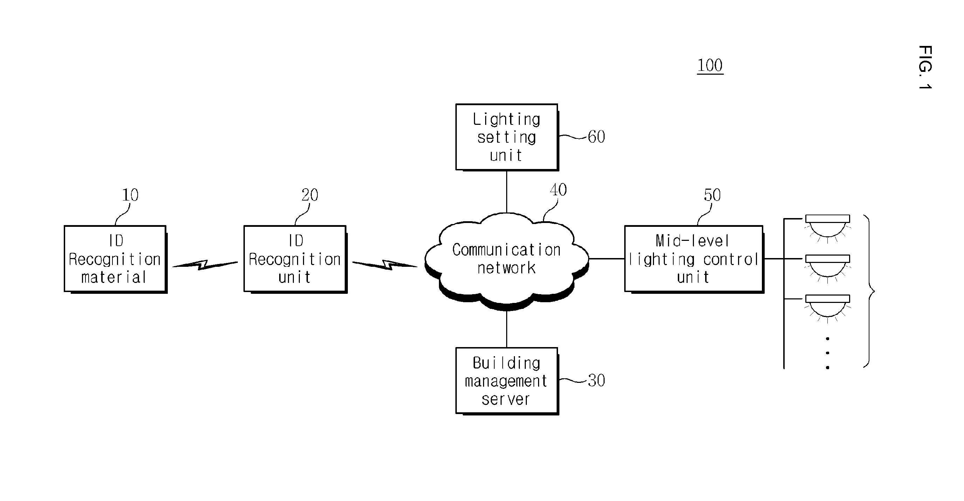

FIG. 1 illustrates a system for automatically controlling illumination in a building according to an embodiment of the present invention.

Referring to FIG. 1, the system 100 (referred to as an automatic illumination control system, hereinafter) for automatically controlling illumination in a building according to an embodiment of the present invention includes an ID recognition material 10, an ID recognition unit 20, a building management server 30, a mid-level lighting control unit 50, a lighting setting unit 60, and a communication network 40.

The communication network 40 provides paths for communication among the ID recognition unit 20, the mid-level lighting control unit 50, the lighting setting unit 60, and the building management server 30. The communication network 40 performs data transmission/reception operations for data transmission and information exchange among the ID recognition unit 20, the mid-level lighting control unit 50, the lighting setting unit 60 and the building management server 30. The communication network 40, which is an IP network that provides a large-capacity data transmission/reception service and a seamless data service through Internet protocol (IP), may be an all IP network corresponding to a combination of different networks based on IP. Alternatively, the communication network 40 may be one of a mobile communication network, WiBro (Wireless Broadband) network, HSDPA (High Speed Downlink Packet Access) network, satellite communication network, and a wireless LAN including Wi-Fi. Furthermore, the communication network 40 is connected by a cable to the ID recognition unit 20, the mid-level lighting control unit 50 and the building management server 30 through a wired communication network to provide data transmission/reception among the ID recognition unit 20, the mid-level lighting control unit 50 and the building management server 30.

The ID recognition material 10 is a means for identifying a user and may be an object carried by the user or a portion of the body of the user. That is, the ID recognition material 10 may be an object, a portion of the user body or information, such as an RF card, fingerprint, iris, a number input using a keypad, etc. by which the user can be identified. The ID recognition material 10 according to an embodiment of the present invention is not limited to the object or a portion of the user body and may include various types of information.

A plurality of ID recognition units 20 are installed at entrances and exits of the building to recognize the ID of a user entering/exiting through the entrances and exits. The ID recognition unit 20 executes a function of recognizing a user ID through the ID recognition material 10. The ID recognition unit 20 can recognize the user ID through a recognition means such as RF card recognition, fingerprint recognition, iris recognition, number recognition using a keypad, etc. The ID recognition unit 20 transmits data about the user ID to the building management server 30. One or more ID recognition units 20 may be installed in each building, and a recognized user ID is transmitted to the building management server 30.

The building management server 30 manages facilities in the building, such as lighting devices, electronic devices and a network. Particularly, the building management server 30 according to the present invention checks user information corresponding to a user ID recognized through the ID recognition unit 20, detects whether a user corresponding to the user ID enters the building, searches an illumination list in association with the user ID when the user enters the building, and controls lights included in the searched illumination list to be turned on.

Upon determining that the user corresponding to the checked user ID exits the building, the building management server 30 searches the illumination list in association with the user ID, checks whether the searched illumination list includes at least one light related to another user ID, and controls lights other than the light related to the other user ID to be turned off when the illumination list includes the at least one light related to the other user ID.

The building management server 30 controls all the lights included in the illumination list to be turned off when the illumination list includes no light related to the other user ID.

The building management server 30 checks locations of offices of a plurality of users, searches a lighting circuit DB for a plurality of illumination lists in association with routes through which the users move to the offices, matches user IDs to the searched illumination lists and registers the matched illumination lists and user IDs in an access user DB.

The building management server 30 may control illumination in a remote building. That is, the building management server 30 can control a remote building that is not equipped with an automatic illumination control system to control illumination in the remote building. Illumination in the remote building may be controlled through the mid-level lighting control unit 50 installed in the building. That is, the building management server 30 may check whether a recognized user ID corresponds to a user of a remote building, and perform data communication with the mid-level lighting control unit 50 of the remote building in order to control illumination of the remote building when the user ID corresponds to the user of the remote building. In this case, the building management server 30 checks whether the user enters the remote building, searches an illumination list in association with the user ID when the user enters the remote building, and controls lights included in the searched illumination list to be turned on.

The building management server 30 may calculate the number of people inside the building on the basis of user IDs in order to check people currently in the building, and store the calculated number. Here, the building management server 30 may check the number of people in the building in automatic connection with an air conditioning system installed in the building. The number of people inside the building is used to check people in the building in the event of fire or crime in the building.

The building management server 30 checks whether a user requests an illumination list, provides a screen for selecting a plurality of lights when the user requests the illumination list, selects the illumination list input by the user, checks whether the number of lights included in the illumination list exceeds a predetermined number, and sets the illumination list when the number of lights included in the illumination list does not exceed the predetermined number.

The building management server 30 generates a warning message when the number of lights included in the illumination list exceeds the predetermined number.

The building management server 30 calculates power consumption of each light, stores power rates corresponding to the calculated power consumption for each floor and displays the power rates, in real time.

The mid-level lighting control unit 50 is included in each building and executes a switching function for lighting control of each building. The mid-level lighting control unit 50 turns lights on or off according to a lighting control signal received from the building management server 30.

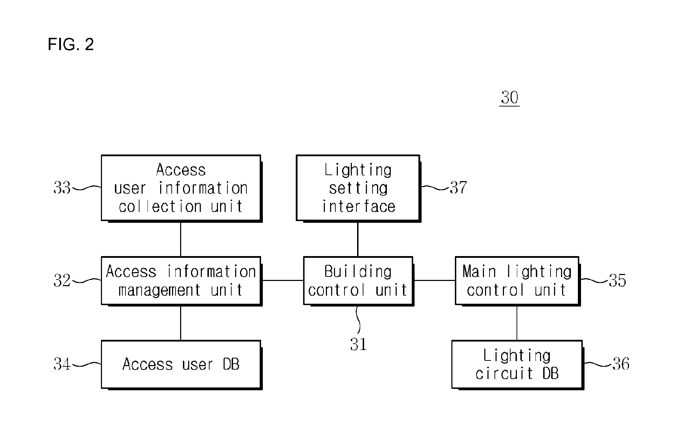

The lighting setting unit 60 provides a screen for setting an illumination list to the building management server 30 at the request of a user. The lighting setting unit 60 may be connected to a web server to provide the screen for setting an illumination list to a lighting setting interface 37 shown in FIG. 2.

FIG. 2 is a block diagram showing a configuration of the building management server 30 according to an embodiment of the present invention.

Referring to FIG. 2, the building management server 30 includes a building control unit 31, an access information management unit 32, an access user information collection unit 33, an access user DB 34, a main lighting control unit 35, the lighting setting interface 37, and a lighting circuit DB 36.

The access information management unit 32 manages entry into and exit from the building of a user. Here, the access information management unit 32 checks a user ID transmitted from the access user information collection unit 33, searches the access user DB 34 for user information corresponding to the checked user ID and extracts the user information. The access user DB 34 stores data about locations of offices of occupants in the building. The access user information collection unit 33 collects information about a user ID recognized through the ID recognition unit 20 and delivers the collected information to the access information management unit 32. The access user information collection unit 33 may collect data such as the ID of a newly registered user, the location of the office of the newly registered user, etc. and transmit the collected data to the access information management unit 32.

The main lighting control unit 35 manages all lights in the building at the request of the building control unit 31. Here, the main lighting control unit 35 may search the lighting circuit DB 36 which stores locations of lights of each floor of the building and transmit data for lighting control to the mid-level lighting control unit 50. That is, the mid-level lighting control unit 50 controls a plurality of lights according to a request signal of the main lighting control unit 35. The mid-level lighting control unit 50 may perform a switching function for controlling lights related to an office corresponding to the user ID recognized through the ID recognition unit 20, from among the plurality of lights.

The building control unit 31 checks user information corresponding to the user ID checked through the access information management unit 32, determines whether the user corresponding to the user information enters/exits the building, searches an illumination list related to the user ID when the user enters/exits the building, and instructs the main lighting control unit 35 to control lights included in the searched illumination list.

Upon determining that the user corresponding to the user ID exits the building, the building control unit 31 searches the illumination list related to the user ID, checks whether the illumination list includes at least one light related to another user ID, and instructs the main lighting control unit 35 to control lights other than the light related to the other user ID when the illumination list includes the at least one light related to the other user ID.

When the illumination list includes no light related to the other user ID, the building control unit 31 instructs the main lighting control unit 35 to control all the lights included in the illumination list.

The building control unit 31 checks locations of offices of a plurality of users, searches the lighting circuit DB 36 for a plurality of illumination lists related to routes through which the users move to the offices, matches the searched illumination lists to user IDs, and registers the matched illumination lists and user IDs in the access user DB 34.

In an embodiment of the present invention, the building management server 30 can control illumination in a remote building. That is, the building control unit 31 controls lights in the remote building that is not equipped with an automatic illumination control system. To achieve this, the building management server 30 needs to be connected to the ID recognition unit 20 or the mid-level lighting control unit 50 of the remote building through a wired or wireless communication means.

The building control unit 31 for controlling the remote building receives data about an entry into or exit from the remote building of occupants of the remote building through the ID recognition unit 20 of the remote building. Here, the ID recognition unit 20 recognizes a user ID of a person who enters/exits the remote building and transmits data corresponding to the recognized user ID to the building management server 30.

The building control unit 31 controls the mid-level lighting control unit 50 of the remote building to manage all the lights in the remote building.

The building control unit 31 transmits a signal for controlling a plurality of lights to the mid-level lighting control unit 50 of the remote building. Here, the mid-level lighting control unit 50 may perform a lighting switching function at the control request of the building management server 30 to turn on or off lights related to the user ID recognized through the ID recognition unit 20, from among the plurality of lights.

The building control unit 31 checks user information corresponding to the user ID recognized through the ID recognition unit 20, determines whether the user corresponding to the user ID enters the building, searches an illumination list related to the user ID when the user enters the building, and instructs the mid-level lighting control unit 50 to control a plurality of lights included in the searched illumination list to be turned on.

Upon determining that the user corresponding to the user ID exits the building, the building control unit 31 searches the illumination list related to the user ID, checks whether the illumination list includes at least one light related to another user ID, and instructs the mid-level lighting control unit 50 to control lights other than the at least one light related to the other user ID to be turned off.

When the illumination list does not include at least one light related to the other user ID, the building control unit 31 instructs the mid-level lighting control unit 50 to control all the lights included in the illumination list to be turned off.

The lighting setting interface 37 may be provided with the screen for setting an illumination list from the lighting setting unit 60 and display the screen in order to set an illumination list at the request of a user. The lighting setting interface 37 may execute the function thereof under the control of the building control unit 31.

As described above, the building management server 30 can store data such as user IDs of a plurality of buildings, illumination lists matched to user IDs, a lighting circuit for each building, etc. and automatically control lights.

Furthermore, the building control unit 31 according to the present invention can calculate the number of people inside the building on the basis of user IDs checked through the ID recognition unit 20 and store the calculated number in order to check people currently in the building. Here, the building control unit 31 can recognize the number of people inside building in cooperation with an air conditioning system installed in the building. The number of people in the building, recognized as above, is used to check people inside the building in the event of fire or crime, for example.

Moreover, the building control unit 31 according to the present invention checks whether a user requests an illumination list, displays the screen for selecting lights when the user requests the illumination list, selects the illumination list input by the user, confirms whether the number of lights included in the illumination list exceeds a predetermined number, and sets the illumination list when the number of lights included in the illumination list does not exceed the predetermined number. When the number of lights included in the illumination list exceeds the predetermined number, the building control unit 31 outputs a warning message.

The building control unit 31 calculates power consumption of each light, stores power rates corresponding to the calculated power consumption for each floor of the building and displays the power rates.

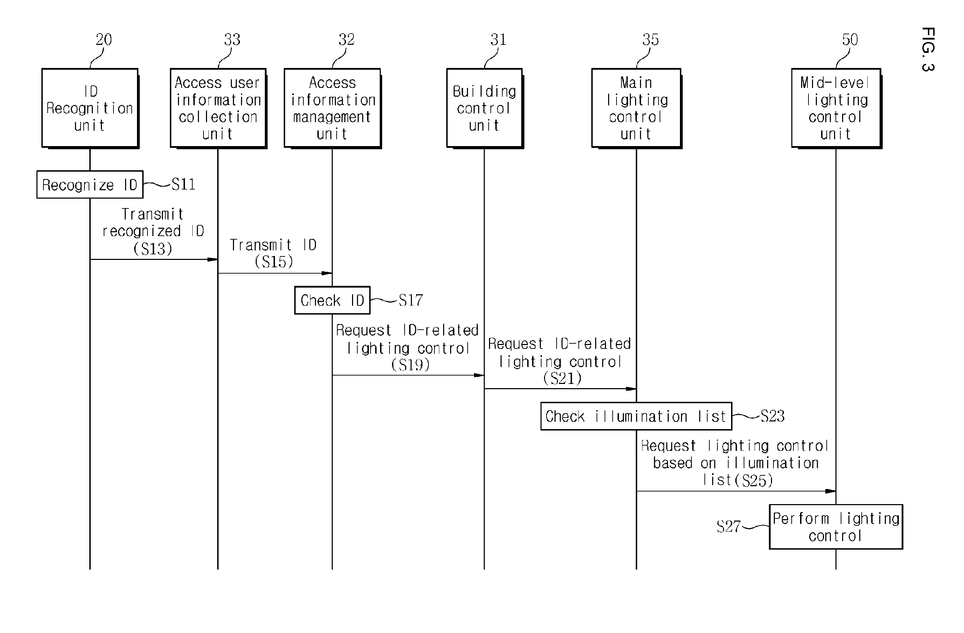

FIG. 3 is a flowchart illustrating a method for automatically controlling illumination in a building.

Referring to FIG. 3, in the method for automatically controlling illumination in a building, the ID recognition unit 20 recognizes a user ID in step S11. The ID recognition unit 20 can recognize the user ID through a recognition means such as RF card recognition, fingerprint recognition, iris recognition and number recognition using a keypad.

Upon recognition of the user ID, the ID recognition unit 20 transmits information about the recognized user ID to the access user information collection unit 33 in step S13. The access user information collection unit 33 transmits the received information about the user ID to the access information management unit 32 in step S15.

Upon receipt of the information about the user ID, the access information management unit 32 checks the user ID in step S17. Here, the access information management unit 32 searches the access user DB 34 for data corresponding to the user ID and confirms an illumination data related to the searched data.

The access information management unit 32 transmits the illumination list related to the user ID to the building control unit 31 to request lighting control in step S19. The building control unit 31 delivers the received illumination list related to the user ID to the main lighting control unit 35 in step S21.

The main lighting control unit 35 checks the received illumination list. Here, the main lighting control unit 35 can check the lighting circuit DB 36 to detect locations of lights related to the user ID. Then, the main lighting control unit 35 requests lighting control to the mid-level lighting control unit 50 in order to control lights included in the illumination list in step S25.

The mid-level lighting control unit 50 controls corresponding lights to be turned on or off at the lighting control request in step S27.

The building management server 30 according to an embodiment of the present invention can control illumination of a remote building. That is, the building management server 30 can control a remote building that is not equipped with an automatic illumination control system to control illumination in the remote building. Specifically, the building management server 30 may check whether a recognized user ID corresponds to a user of the remote building and control illumination of the remote building when the user ID corresponds to the user of the remote building. In this case, the building management server 30 checks whether the user enters the remote building, searches an illumination list in association with the user ID when the user enters the remote building, and transmits a signal for controlling all the lights included in the searched illumination list to the mid-level lighting control unit 50 to turn the lights on. When the user corresponding to the checked user ID exits the remote building, the building management server 30 searches the illumination list in association with the user ID, checks whether the illumination list includes a light related to another user, and transmits a signal for controlling lights other than the light related to the other user to the mid-level lighting control unit 50 to turn the lights off when the illumination list includes the light related to another user.

In addition, the building management server 30 may calculate the number of people inside the building on the basis of user IDs in order to check people currently in the building, and store the calculated number. Here, the building management server 30 may check the number of people in the building in automatic connection with an air conditioning system installed in the building. The number of people inside the building is used to check people in the building in the event of fire or crime in the building.

Accordingly, lights can be tuned on/off regardless of whether or not people are inside a building, thereby reducing energy waste resulting from lighting of vacant space, reducing the costs of changing lighting lamps, and reducing the costs of energy for illumination. Furthermore, the present invention can reduce the inconvenience of turning lights on/off using switches for a user and automatically turn lights on/off according to entry and exit information for people inside a building, thereby enhancing user convenience. In addition, it is possible to check the number of people inside a building in real time, provide information about illumination energy consumption for each floor and each section in real time to offer a power rate charging scheme in response to energy consumption, thereby inducing a user in the building to voluntarily reduce energy consumption.

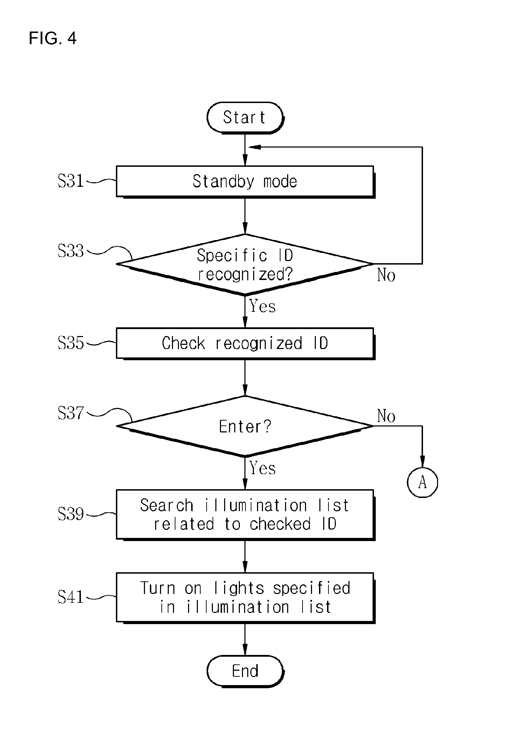

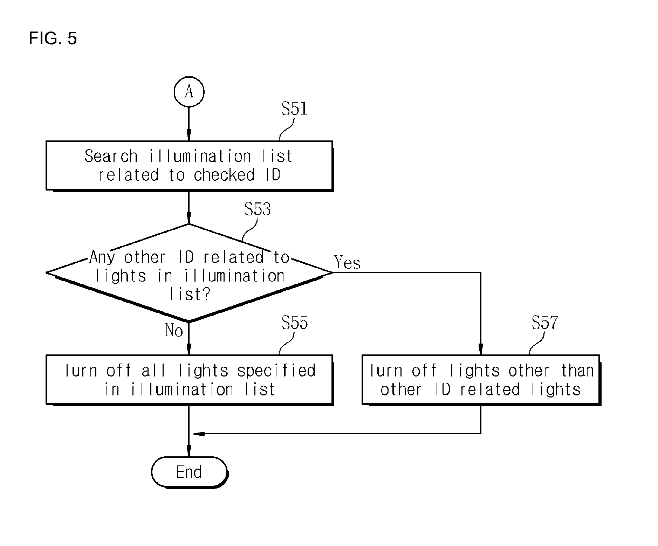

FIGS. 4 and 5 are flowcharts illustrating a method for automatically controlling illumination in a building according to an embodiment of the present invention.

Referring to FIGS. 4 and 5, in the method for automatically controlling illumination in a building according to an embodiment of the present invention, the building management server 30 is in a standby mode in step S31. Here, before being in the standby mode, the building management server 30 may check locations of offices corresponding to a plurality of users in the building, search a plurality of illumination lists related to routes through which the users move to the offices, match the searched illumination lists to user IDs and register the matched illumination list and user IDs.

The building management server 30 in the standby mode checks whether a specific user ID is recognized in step S33. Here, the building management server 30 can confirm user information about the location of an office and a user name corresponding to the recognized user ID in step S35. The building management server 30 recognizes the user ID through a recognition means such as RF card recognition, fingerprint recognition, iris recognition and number recognition using a keypad.

The building management server 30 detects whether the user corresponding to the checked user ID enters the building in step S37. When the user enters the building, the building management server 30 searches an illumination list related to the checked user ID in step S39. Then, the building management server 30 transmits a signal for controlling a plurality of lights included in the searched illumination list to the mid-level lighting control unit 50 to turn the lights on in step S41.

Upon determining that the user corresponding to the user ID exits the building, the building management server 30 searches then illumination list related to the user ID in step S51. The building management server 30 checks whether the searched illumination list includes at least one light related to another user ID in step S53. When the illumination list includes the at least one light related to the other user ID, the building management server 30 transmits a signal for controlling lights other than the light related to the other user ID to the mid-level lighting control unit 50 to turn the lights off in step S55. When the illumination list does not include the at least one light related to the other user ID, the building management server 30 transmits a signal for controlling all the lights included in the illumination list to the mid-level lighting control unit 50 to turn the lights off.

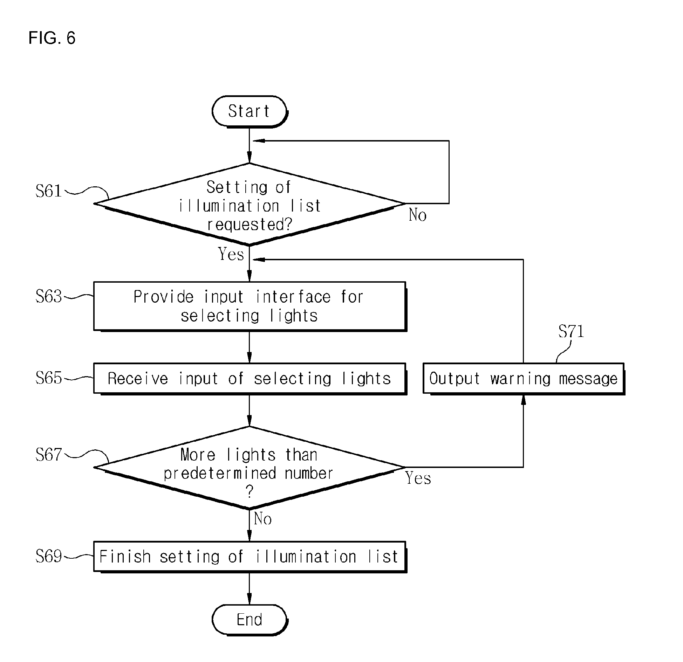

FIG. 6 is a flowchart illustrating a method for automatically controlling illumination when a user moves according to an embodiment of the present invention.

Referring to FIG. 6, in the method for automatically controlling illumination when a user moves, the building management server 30 checks whether a user requests an illumination list while lights related to a user ID are turned on, in step S61. Here, the user may directly communicate with the building management server 30 through a web server for data transmission/reception in order to re-set the illumination list according to location change. That is, if the building management server 30 manages illumination lists when many people in the building move simultaneously or sequentially, operation efficiency may be decreased and overload may be generated. Accordingly it is preferable that the user directly re-set the illumination list when he moves.

When the user requests the illumination list, the building management server 30 provides the screen for selecting a plurality of lights in step S63. The building management server 30 detects an input signal for selecting the illumination list requested by the user in step S65. Then, the building management server 30 can confirm the illumination list input by the user.

The building management server 30 checks whether the number of lights included in the illumination list exceeds a predetermined number in step S67. If the number of lights included in the illumination list does not exceed the predetermined number, the building management server 30 sets the illumination list in step S69. The building management server 30 can turn on the lights corresponding to the set illumination list. That is, the building management server 30 limits the authority to re-set the illumination list because the user directly sets the illumination list when he moves. Accordingly, the building management server 30 can control lights turned on in a wide range in the building.

If the number of lights included in the illumination list exceeds the predetermined number, the building management server 30 generates a warning message in step S71 and provides a screen for re-setting the illumination list. The warning message may represent that the number of lights included in the illumination list exceeds the predetermined number.

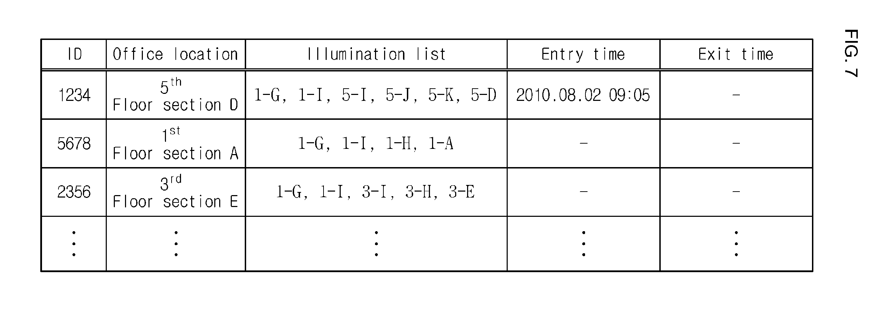

FIG. 7 shows entry/exit information according to an embodiment of the present invention.

Referring to FIG. 7, user information stored in the access user DB 34 of the building management server 30 according to an embodiment of the present invention may include user IDs, locations of offices, illumination lists, and data corresponding to entry time and exit time. Each user ID may be updated for each entry into or exit from a building. For example, the illumination list is data about illumination necessary for a user to move from an entrance of the building to his office and may be data for controlling lighting when the user enters or exits the building. Here, the access user DB 34 may store user information about occupants of the building.

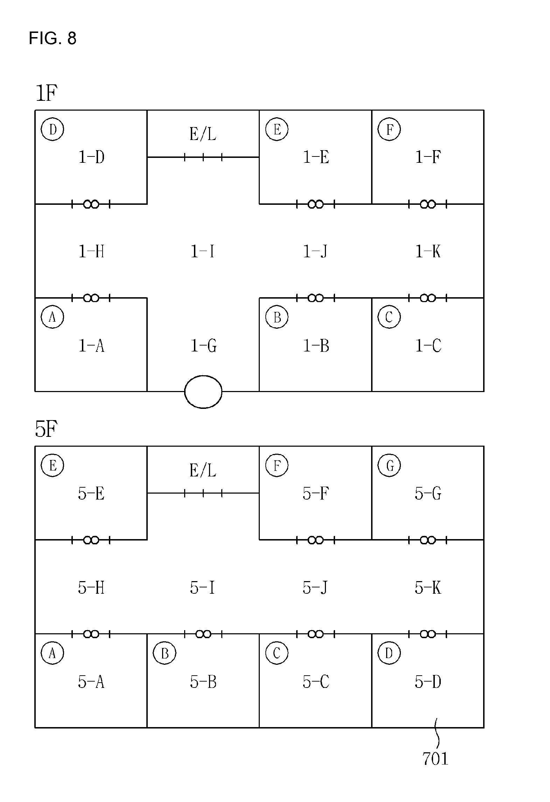

FIG. 8 shows a lighting circuit according to an embodiment of the present invention.

Referring to FIG. 8, locations of lights, stored in the lighting circuit DB 36 of the building management server 30 according to an embodiment of the present invention include data about an illumination list corresponding to each floor of the building. For example, when the location of an office of a user corresponds to section D 701 of the fifth floor of the building, the building management server 30 transmits a signal for controlling lights corresponding to 1-G, 1-I, 5-I, 5-J and 5-D to be turned on to the mid-level lighting control unit 50 to turn the lights on upon determining that the user enters the building by checking the user ID. Conversely, the building management server 30 controls the lights corresponding to 1-G, 1-I, 5-I, 5-J and 5-D to be turned off upon determining that the user exits the building by checking the user ID. In this case, the building management server 30 checks whether the illumination list corresponding to the user includes a light related to an illumination list of another user and, when the light related to the illumination list of the other user is not present, transmits a signal for controlling all the lights included in the illumination list corresponding to the user to the mid-level lighting control unit 50 to turn the lights off. When the illumination list corresponding to the user includes the light related to the illumination list of the other user, the building management server 30 transmits a signal for controlling only lights which are not related to the other user to the mid-level lighting control unit 50 to turn the corresponding lights off.

Those skilled in the art will appreciate that the present invention may be carried out in other specific ways than those set forth herein without departing from the spirit and essential characteristics of the present invention. The above embodiments are therefore to be construed in all aspects as illustrative and not restrictive. The scope of the invention should be determined by the appended claims and their legal equivalents, not by the above description, and all changes coming within the meaning and equivalency range of the appended claims are intended to be embraced therein.

### Industrial Applicability

A method and system for automatically controlling illumination in a building according to the present invention recognize a user ID, checks whether a user corresponding to the user ID enters/exits the building, search an illumination list related to the user, and control a plurality of lights corresponding to the illumination list. Accordingly, lights can be tuned on/off regardless of whether or not people are inside the building, thereby reducing energy waste resulting from lighting of vacant space, reducing the costs of changing lighting lamps, and decreasing the costs of energy for illumination, while minimizing the inconvenience of turning lights on/off using switches for a user. Lights can be automatically turned on/off according to entry and exit information about people inside the building, thereby enhancing user convenience, and additionally enabling automatic real-time monitoring of data relating to people inside the building as well as of an air conditioning system of the building.

## Claims

1. A system for automatically controlling illumination in a building, the system comprising:
one or more ID recognition units installed at each entrance and configured to recognize IDs of users who enter or exit the building; and
a building management server configured to check a user ID recognized through the ID recognition units, to detect an entry into or exit from the building of a user corresponding to the checked user ID, to search an illumination list in association with the user ID according to the entry into the building, to control a plurality of lights included in the illumination list to be turned on, to check whether the illumination list includes at least one light corresponding to an illumination list related to another user ID according to the exit from the building, and to control lights other than the at least one light corresponding to the illumination list related to the other user ID to be turned off upon determining that the illumination list includes the at least one light corresponding to the illumination list related to the other user ID.

2. A building management server comprising:
an access information management unit configured to recognize at least one user ID and to check user information corresponding to the recognized user ID;
a main lighting control unit configured to check a plurality of illumination lists according to a signal from a building control unit and to control a mid-level lighting control unit to operate at least one light; and
the building control unit configured to check the user ID, to detect an entry into or exit from the building of a user corresponding to the checked user ID, to search an illumination list in association with the user ID according to the entry into the building, to control a plurality of lights included in the illumination list to be turned on, to check whether the illumination list includes at least one light corresponding to an illumination list related to another user ID according to the exit from the building, and to control lights other than the at least one light corresponding to the illumination list related to the other user ID to be turned off upon determining that the illumination list includes the at least one light corresponding to the illumination list related to the other user ID.

3. The building management server of claim 2, wherein the access information management unit recognizes the user ID through at least one of recognition means including RF card recognition, fingerprint recognition, iris recognition, and number recognition using a keypad.

4. The building management server of claim 2, wherein the building control unit controls all the lights included in the illumination list to be turned off upon determining that the illumination list does not include the at least one light corresponding to the illumination list related to the other user ID.

5. The building management server of claim 2, wherein the building control unit checks locations of offices of a plurality of users, searches a lighting circuit DB for a plurality of illumination lists related to routes through which the users move to the offices, matches the searched illumination lists to user IDs, and registers the matched illumination lists and user IDs in an entry and exit DB.

6. The building management server of claim 2, wherein the building control unit checks whether the user ID corresponds to a user ID corresponding to a user of a remote building and, when the user ID corresponds to the user ID of the user of the remote building, controls illumination of the remote building.

7. The building management server of claim 2, wherein the building control unit calculates the number of people inside the building through the checked user ID, stores and displays the calculated number.

8. The building management server of claim 2, wherein the building control unit determines whether a user requests an illumination list, provides a screen for selecting a plurality of lights when the user requests the illumination list, selects the illumination list input by the user, checks whether the number of lights included in the illumination list exceeds a predetermined number, and sets the illumination list when the number of lights included in the illumination list does not exceed the predetermined number.

9. The building management server of claim 8, wherein the building control unit checks the illumination list input by the user and generates a warning message when the number of lights included in the illumination list exceeds the predetermined number.

10. The building management server of claim 2, wherein the building control unit calculates power consumption of each light, stores power rates corresponding to the calculated power consumption for each floor and displays the power rates in real time.

11. A method for automatically controlling illumination in a building, the method comprising:
at a building management server, checking at least one user ID;
at the building management server, detecting an entry into or exit from the building of a user corresponding to the checked user ID;
at the building management server, searching an illumination list in association with the user ID according to the entry into the building and controlling a plurality of lights included in the illumination list to be turned on; and
at the building management server, checking whether the illumination list includes at least one light corresponding to an illumination list related to another user ID according to the exit from the building, and controlling lights other than the at least one light corresponding to the illumination list related to the other user ID to be turned off.

12. The method of claim 11, wherein the checking of the user ID comprises:
at the building management server, recognizing the user ID; and
at the building management server, confirming user information about an office location and a user name corresponding to the recognized user ID.

13. The method of claim 11, wherein the checking of the user ID comprises checking the user ID through at least one of recognition means including RF card recognition, fingerprint recognition, iris recognition, and number recognition using a keypad.

14. The method of claim 11, wherein the controlling of lights other than the at least one light corresponding to the illumination list related to the other user ID to be turned off comprises, at the building management server, controlling all the lights included in the illumination list to be turned off upon determining that the illumination list does not include the at least one light corresponding to the illumination list related to the other user ID.

15. The method of claim 11, further comprising, prior to the checking of the user ID:
at the building management server, checking locations of offices of a plurality of users;
at the building management server, searching a plurality of illumination lists related to routes through which the users move to the offices; and
at the building management server, matching the searched illumination lists to user IDs and registering the matched illumination lists and user IDs.

16. The method of claim 11, wherein the checking of the user ID comprises:
at the building management server, checking whether the user ID corresponds to a user ID corresponding to a user of a remote building; and
at the building management server, controlling illumination of the remote building when the user ID corresponds to the user ID of the user of the remote building.

17. The method of claim 16, wherein the controlling of illumination of the remote building comprises:
at the building management server, detecting an entry into or exit from the building of a user corresponding to the checked user ID in order to control illumination of the remote building;
at the building management server, searching an illumination list in association with the user ID according to the entry into the building; and
at the building management server, controlling a plurality of lights included in the illumination list to be turned on.

18. The method of claim 11, further comprising, after the detecting of an entry into or exit from the building:
at the building management server, calculating the number of people inside the building through the checked user ID; and
at the building management server, storing and displaying the calculated number.

19. The method of claim 11, further comprising, after the controlling of the plurality of lights included in the illumination list to be turned on:
at the building management server, determining whether a user requests an illumination list;
at the building management server, providing a screen for selecting a plurality of lights when the user requests the illumination list;
at the building management server, selecting the illumination list input by the user;
at the building management server, checking whether the number of lights included in the illumination list exceeds a predetermined number; and
at the building management server, setting the illumination list when the number of lights included in the illumination list does not exceed the predetermined number.

20. The method of claim 19, wherein the checking of whether the number of lights included in the illumination list exceeds the predetermined number comprises, at the building management server, generating a warning message when the number of lights included in the illumination list exceeds the predetermined number.

21. The method of claim 11, further comprising, after the controlling of the plurality of lights included in the illumination list to be turned on:
at the building management server, calculating power consumption of each light; and
at the building management server, storing power rates corresponding to the calculated power consumption for each floor and displaying the power rates in real time.
